(19) Europäisches Patentamt
European Patent Office
Office européen des brevets

(11) **EP 2 746 806 B1**

(12) # EUROPÄISCHE PATENTSCHRIFT

(45) Veröffentlichungstag und Bekanntmachung des Hinweises auf die Patenterteilung:
**19.10.2016 Patentblatt 2016/42**

(51) Int Cl.:
*G01S 17/02* *(2006.01)*    *G01S 7/481* *(2006.01)*
*G01S 7/497* *(2006.01)*

(21) Anmeldenummer: **12198845.5**

(22) Anmeldetag: **21.12.2012**

(54) **Selbstkalibrierender Lasertracker und Selbstkalibrierungsverfahren**

Self-calibrating laser tracker and auto calibration technique

Appareil de suivi laser à calibrage automatique et procédé de calibrage automatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.06.2014 Patentblatt 2014/26**

(73) Patentinhaber: **Leica Geosystems AG**
**9435 Heerbrugg (CH)**

(72) Erfinder: **Markendorf, Albert**
**5046 Walde (CH)**

(74) Vertreter: **Gyaja, Christoph Benjamin**
**Kaminski Harmann**
**Patentanwälte AG**
**Landstrasse 124**
**9490 Vaduz (LI)**

(56) Entgegenhaltungen:
**WO-A1-2009/100773    DE-C1- 19 941 638**
**US-A1- 2009 109 426**

EP 2 746 806 B1

## Beschreibung

Die vorliegende Erfindung betrifft einen selbstkalibrierenden Lasertracker zur Bestimmung von Koordinaten von Raumpunkten nach dem Oberbegriff des Anspruchs 1. Der Lasertracker weist einen stationären Teil mit einer Basis, einen gegenüber der Basis um eine Vertikalachse rotierbaren Teil und einer zusammen mit dem rotierbaren Teil drehbaren Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf.

Die Erfindung betrifft auch ein zugehöriges Selbstkalibrierungsverfahren für einen Lasertracker nach dem Oberbegriff des Anspruchs 10.

Lasertracker gehören als Koordinatenmessgeräte zu einer Art von Messgeräten, die die Koordinaten eines (Raum-)Punkts durch Aussendung eines Laserstrahls auf den Punkt messen. Der Laserstrahl mag direkt auf dem Punkt auftreffen oder auf einen Retroreflektor (häufig Würfeleckenprisma oder "Corner Cube" oder Anordnung mit drei senkrecht zueinander orientierten Spiegeln) der zu dem Punkt in Kontakt steht. Im Falle eines Retroreflektors wird der darauf auftreffende Laserstrahl "in sich", d. h. koaxial zum emittierten Laserstrahl reflektiert, wenn dieser genau auf dem Zentrum des Retroreflektors auftrifft. Andernfalls, wenn der ausgesandte Laserstrahl auf dem Retroreflektor ausserhalb dessen Zentrums auftrifft, weist der reflektierte Laserstrahl einen parallelen Versatz zum ausgesandten Laserstrahl auf.

Typischerweise bestimmt das Gerät die Koordinaten des Punkts durch Messung der Distanz des Punktes vom Messgerät und zweier Winkel mittels zu Drehachsen des Lasertrackers zugeordneten Winkelencodern bzw. Winkelgebern zwischen einer Standardausrichtung des Laserstrahls bezüglich seiner Anzielrichtung zu dem auszumessenden Punkt. Die Distanz wird mit einer Distanz-Messvorrichtung, wie beispielsweise einem absoluten Distanzmesser und/oder einem Interferometer, gemessen. Beispielhafte Systeme zur Bestimmung von Koordinaten eines Punkts sind offenbart in der US 4,790,651 und der US 4,714,339.

Lasertracker sind eine spezielle Art von Koordinatenmessgeräten, mit denen ein, insbesondere sich bewegender, Zielpunkt, insbesondere ausgebildet als ein Retroreflektor, mittels eines oder mehrerer, insbesondere fokussierter, Laserstrahlen verfolgt wird.

Für einen zuverlässigen, im Messergebnis reproduzierbaren, Einsatz von Lasertrackern ist die Einstellung und Anwendung von Kalibrierungsparametern erforderlich. Kalibrierungsparameter werden typischerweise als numerische Werte in Form von Software oder Firmware in für die Lasertracker-Steuerung zugänglicher Weise gespeichert und dienen, angewendet auf die Rohmessdaten des Lasertrackers, der Verbesserung der Messgenauigkeit. Typischerweise werden beim Hersteller des Lasertrackers sogenannte Kalibrierungs-Messverfahren zur Bestimmung der Kalibrierungsparameter durchgeführt, und die entsprechenden Kalibrierungsparameter werden mit der Steuerungssoftware gespeichert. Geräteseitig werden üblicherweise ausserdem mit der Steuerung gewisse Toleranzen festgelegt, wie weit aktuelle Kalibrierungsparameter von vorher gespeicherten Kalibrierungsparametern abweichen dürfen. Zur Bestimmung von Änderungen der Gerätekalibrierung werden typischerweise in bestimmten Intervallen und/oder beim Einschalten des Lasertrackers Kontroll-Kalibrierungsmessungen durchgeführt.

Änderungen der erforderlichen Gerätekalibrierung beruhen insbesondere auf thermischen Drift-Effekten, aber auch beispielsweise auf mechanischen Erschütterungen.

In der EP 1 420 264 werden ein Lasertracker und ein damit ausführbares Messverfahren mit Kalibrierungsvorrichtungen und -vorschriften offenbart. Beschrieben wird ein Messsystem, das ein Messgerät mit einem Lasertracker und einen optoelektronischen Sensor in relativ zueinander unveränderbaren Positionen, einen Systemrechner und ein separates, d. h. entfernt vom Lasertracker anzuordnendes, Messhilfsinstrument mit einem Reflektor und mindestens drei Lichtpunkten aufweist. Der Lasertracker wird mittels der nachfolgend beschriebenen Verfahrensschritte kalibriert: Das Messhilfsinstrument wird mit einer Anordnung von Hilfsreflektoren starr verbunden und um mindestens zwei relativ zum Messhilfsinstrument voneinander verschiedene Drehachsen bewegt. In mindestens je zwei Drehpositionen um jede der mindestens zwei Drehachsen werden durch den Lasertracker Reflektor und Hilfsreflektoren angezielt und durch den optoelektronischen Sensor die Lichtpunkte auftreffenden Laserlichts registriert. Aus den Messdaten des Lasertrackers werden Positionen und Orientierungen der Reflektoranordnung relativ zum Lasertracker und aus den Messdaten des optoelektronischen Sensors Positionen und Orientierungen der Lichtpunktanordnung relativ zum optoelektronischen Sensor bestimmt und daraus die mindestens zwei Drehachsen relativ zur Reflektoranordnung bzw. zur Lichtpunktanordnung berechnet. Dann werden aus den ermittelten Messdaten die Kalibrierungsdaten errechnet.

Diese Systemanordnung und die damit verbundene Kalibrierungsmethode entsprechen nicht der Anordnung und nicht den typischerweise gesetzten Spezifikationen eines Lasertrackers gemäss der vorliegenden Erfindung und insbesondere auch nicht heutigen Anforderungen an ein derartiges Messsystem.

Insbesondere nachteilig ist das Messhilfsinstrument für die Kalibrierung ausserhalb des Vermessungsgeräts bzw. Lasertrackers angeordnet, was Anforderungen an heutige Lasertracker für eine möglichst vollständige, kompakt angeordnete Integration bzw. Verbindung mit dem Messgerät nicht erfüllt, und aus der EP 1 420 264 ist kein Selbstkalibrierungsverfahren mit automatisch ablaufenden, gerätegesteuerten Verfahrensschritten ohne Involvierung eines Bedieners zu entnehmen.

Die Dokumente DE 199 41 638 C1 und WO 2009/100773 A1 zeigen jeweils ein Kalibriersystem mit einem extra zur Kalibrierung verwendeten positionssensitiven Flächendetektor, wobei jedoch nicht der eigentliche Messstrahl vermessen wird.

In der US 2009/0109426 und der WO 2005/026772 wird ein selbstkalibrierender Lasertracker mit einem Laser zur Aussendung eines Laserstrahls, einem Planspiegel und mindestens zwei integrierten unbeweglichen, reflektierenden Vorrichtungen sowie einem rotierbaren Spiegel und einem positionssensitiven Detektor offenbart. Eine der mindestens zwei unbeweglichen, reflektierenden Vorrichtungen ist als ein Corner-Cube-Retroreflektor und eine zweite als ein Planspiegel ausgebildet. Der Corner-Cube-Retroreflektor und der Planspiegel können an einem stationären Teil des Messsystems in Position fixiert sein und sind ausgebildet, um den Laserstrahl nach einem Zweilagen-Messverfahren, d. h. in einem "Vorderseiten-" und einem "Rückseiten-Modus", zu reflektieren. Dabei entsprechen der "Vorderseiten-Modus" der Ausrichtung des Lasertrackers gemäss einer regulären Zielverfolgung und der "Rückseiten-Modus" einer entgegengesetzten Ausrichtung des Lasertrackers.

Gemäss der in der US 2009/0109426 und der WO 2005/026772 offenbarten Anordnungen werden Messwerte von am Gerät angeordneten Temperatursensoren verwendet, um eine Temperaturabhängigkeit der zu bestimmenden Werte für die Kalibrierungsparameter zu ermitteln.

Die in der US 2009/0109426 und der WO 2005/026772 offenbarten Anordnungen sind jedoch nachteilig wegen der Notwendigkeit einer Verwendung eines aufwendig herstellbaren Einzel-Retroreflektors wie eines Corner-Cube-Retroreflektors mit genau definierten bzw. hergestellten reflektierenden Oberflächen und sehr hohen Anforderungen an dessen exakte Positionierung für Zwecke einer verlässlichen Selbstkalibrierung der Justierung eines Lasertrackers.

Eine Aufgabe der Erfindung ist daher die Bereitstellung eines gegenüber dem Stand der Technik verbesserten Koordinatenmessgerätes, insbesondere eines Lasertrackers, mit weniger aufwendigen optischen Komponenten zur Ausführung einer Selbstkalibrierung der Justierung des Lasertrackers, verbunden mit einer vereinfachten Durchführung der Selbstkalibrierung. Dabei soll der Lasertracker dazu ausgebildet sein, eine solche Selbstkalibrierung seiner Justierung automatisch, insbesondere nach einem Aufstarten des Geräts, ohne erforderliche Tätigkeiten oder Eingriffe eines Benutzers, zu ermöglichen. Ausserdem sollen alle für eine solche Selbstkalibrierung erforderlichen Komponenten in der Koordinaten-Messvorrichtung bzw. dem Lasertracker integriert bzw. daran fest angeordnet sein.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Aufgabe wird erfüllt durch eine selbstkalibrierende Koordinaten-Messvorrichtung, insbesondere einen selbstkalibrierenden Lasertracker, zur Bestimmung von Koordinaten von Raumpunkten. Nachfolgend beziehen sich alle Angaben bezüglich eines Lasertrackers auch auf eine entsprechende Koordinaten-Messvorrichtung. Der Lasertracker weist einen stationären Teil mit einer Basis, einen gegenüber der Basis um eine Vertikalachse rotierbaren Teil und eine zusammen mit dem rotierbaren Teil drehbare Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf. Vorzugsweise ist an der Basis ein Neigungssensor zur Bestimmung einer Neigung in einer Horizontalrichtung und einer zur Horizontalrichtung senkrechten Vertikalrichtung angeordnet. Des Weiteren weist der Lasertracker eine Kippachse und eine Stehachse auf. In der Strahllenkeinheit ist ein Strahlteiler zur Umlenkung eines von dem Zielpunkt oder dem Reflektor zurückkehrenden Laserstrahls auf einen in der Strahllenkeinheit integrierten ersten positionssensitiven Flächendetektor integriert. Der positionssensitive Flächendetektor kann insbesondere ein erster PSD sein; es sind ebenso aber auch Bildsensoren wie CCD oder CMOS verwendbar. Ebenfalls bereitgestellt ist eine Auswerte- und Steuereinheit zur Bestimmung eines Auftreffpunkts der reflektierten Messstrahlung auf dem Flächendetektor zur Erzeugung eines Ausgangssignals zur Positionsbestimmung des Ziels und insbesondere zur Steuerung einer Zielverfolgungsfunktionalität.

Insbesondere kann der Lasertracker noch weitere gattungsgemässe Komponenten aufweisen, unter anderem eine Kamera zur Erfassung der räumlichen Ausrichtung des Ziels, und mindestens eine Kamera zur Groblokalisierung des Ziels, ausserdem zur Bereitstellung der Entfernungsmessfunktionalität einen Absolutdistanzmesser und ein Interferometer. Die Messstrahlung kann vorzugsweise durch einen Helium-Neon-Laserofen erzeugt werden.

Der erfindungsgemässe Lasertracker ist gekennzeichnet durch eine ausserhalb der Strahllenkeinheit, insbesondere an der Basis, angebrachte Kalibrierungsvorrichtung zur Verwendung mit einer Selbstkalibrierungsfunktionalität, im Rahmen derer Kalibrierungsparameter bezüglich einer Position und/oder Richtung der Messstrahlung bestimmbar sind, insbesondere ein Parallelversatz und eine Richtungsabweichung der Messstrahlung. Die Kalibrierungsvorrichtung weist erfindungsgemäss einen positionssensitiven Flächendetektor auf, vorzugsweise in Form eines zweiten PSD; es sind ebenso aber auch Bildsensoren wie CCD oder CMOS verwendbar. Der zweite PSD ist so positioniert, dass Messstrahlung von der Strahllenkeinheit auf ihn emittierbar ist. Die Auswerte- und Steuereinheit ist erfindungsgemäss zudem ausgestaltet zur Bestimmung eines Auftreffpunkts von auf dem zweiten PSD auftreffender Messstrahlung, wodurch Kalibrierungsparameter bezüglich einer Position und/oder Richtung der Messstrahlung bestimmbar sind.

Die Erfindung stellt damit einen Lasertracker bereit, mit welchem eine automatisch ablaufende Selbstkalibrierung der Justierung des Lasertrackers ohne erforderliche Tätigkeiten oder Eingriffe eines Benutzers ermöglicht wird.

In einer bevorzugten Ausführungsform ist im Rahmen der Selbstkalibrierungsfunktionalität durch den Lasertracker eine Zweilagenmessung durchführbar, wobei im Rahmen der Zweilagenmessung in einer ersten und einer zweiten Ausrichtung der Strahllenkeinheit Messstrahlung auf den zweiten PSD emittierbar ist, insbesondere wobei die Strahllenkeinheit in der zweiten Ausrichtung gegenüber der ersten Ausrichtung bezüglich des Horizontalschwenkwinkels um 180° gedreht ist und/oder und dieser gegenüber "auf dem Kopf" steht.

In jeder der beiden Ausrichtungen wird die Messstrahlung vorzugsweise zunächst auf einen zuvor bestimmten Servokontrollpunkt eingeregelt und anschliessend über die Winkelmessfunktionalität der Horizontalschwenkwinkel und der Vertikalschwenkwinkel bestimmt.

In einer weiteren bevorzugten Ausführungsform weist die Kalibrierungsvorrichtung ein optisches Element auf, das in Strahlrichtung der Messstrahlung vor dem zweiten positionssensitiven Flächendetektor angeordnet ist. Das optische Element ist dabei vorzugsweise an der Basis in einer bekannten räumlichen Beziehung zum zweiten positionssensitiven Flächendetektor bereitgestellt, sowie derart gestaltet und angeordnet, dass Kalibrierungsparameter bezüglich einer Richtung der Messstrahlung bestimmbar sind.

Vorzugsweise ist in Einstrahlungsrichtung auf den zweiten PSD vor diesem ein optisches Element als Bestandteil der Kalibrierungsvorrichtung vorgesehen, insbesondere teildurchlässig für die Messstrahlung.

In einer Ausführungsform ist dieses optische Element eine vor der zweiten PSD angebrachte Lochblende, die als Kollimator dient. Blende und PSD sind zueinander vorzugsweise wie in einer Lochkamera angeordnet. Die Richtung der Zielachse kann dabei unabhängig von einem eventuell vorhandenen Versatz der Zielachse bestimmt werden. Vorteilhaft werden darüber hinaus keine hohen Ansprüche an eine exakte Ausrichtung der Lochkamera gestellt, da mit einer ausreichend dimensionierten PSD eine nicht orthogonale Ausrichtung der Lochkamera zur Zielachse kompensiert werden kann.

Vorzugsweise ist die Öffnung der Blende kleiner als der Strahldurchmesser. Unter anderem ermöglicht dies - selbst dann wenn der Strahldurchmesser nicht symmetrisch ist - ausreichend genau bestimmen zu können, wann die Messstrahlung mit der Lochkamera kollimiert ist. Wird der Strahl mittels Steh- und Kippachse in einem Raster über die Lochkamera bewegt, kann so die Intensitätsverteilung innerhalb des Strahls aufgezeichnet werden. Aus den einzelnen Beobachtungen lässt sich dann, ähnlich wie bei den Pixeln eines CCD- oder CMOS-Sensors, der Schwerpunkt berechnen. Dadurch, dass man jeder Beobachtung sowohl einen Positionswert auf der zweiten PSD, als auch einen Winkelwert des Lasertrackers zuordnen kann, wird die Lochkamera, d. h. deren Abbildungsmassstab bzw. Kammerkonstante, vorteilhaft durch das Abrastern automatisch mitkalibriert. Das System ist demnach selbstkalibrierend und muss nur für die kurze Dauer des Abrasterns stabil bleiben. Es kann vorzugsweise auch ein optisches Gitter an der Blende vorgesehen sein, das bei einem Anstrahlen durch die Messstrahlung ein Interferenzmuster auf der Oberfläche des zweiten PSD erzeugt, insbesondere wobei das Interferenzmuster zu einer genauen Bestimmung eines Auftreffpunktes der Messstrahlung auf dem zweiten PSD verwendet werden kann.

In einer Ausführungsform ist das optische Element zur Reflexion eines Teiles der Messstrahlung als reflektierter Messstrahlung auf den ersten PSD ausgestaltet.

In einer besonderen Ausführungsform ist die vor der zweiten PSD angebrachte Lochblende als ein Retroreflektor ausgestaltet, beispielsweise - wie in der WO 01/09642 A1 oder in der EP 0 405 423 A2 beschrieben - als ein teilentspiegelter Tripelspiegel. Alternativ kann die Lochblende auch eine reflektierende Oberfläche aufweisen, insbesondere ausgestaltet als ein Planspiegel oder eine retroreflektierende Folie. In diesen Fällen ist die Öffnung der Lochblende vorzugsweise kleiner als der Strahldurchmesser der Messstrahlung, und die reflektierende Oberfläche grenzt vorzugsweise direkt an die Öffnung an. Ein erster Teil der Messstrahlung trifft somit auf dem zweiten PSD auf, während ein zweiter Teil der Messstrahlung durch die reflektierende Oberfläche oder den Retroreflektor auf den ersten PSD (retro-)reflektiert wird.

In einer Ausführungsform ist das optische Element als ein für die Messstrahlung teildurchlässiges Reflexionsmittel ausgestaltet.

Dabei kann das teildurchlässige Reflexionsmittel ein teildurchlässiger Planspiegel zur Bestimmung des Zielachsen-Richtungsfehlers mittels Autokollimation sein. Vorteilhaft können durch eine solche kombinierte Anordnung, bei der auf den teildurchlässigen Planspiegel auftreffendes Licht auf den in Einstrahlungsrichtung dahinter angeordneten PSD teilweise durchtritt, Messungen eines Zielachsen-Richtungsfehlers und eines Versatzes der Zielachse in einem Messvorgang kombiniert werden, was insbesondere auch eine Beschleunigung der Durchführung der Selbstkalibrierungsmessungen ermöglicht. Insbesondere kann der Planspiegel direkt auf der PSD-Oberfläche angeordnet sein.

Ausserdem kann das teildurchlässige Reflexionsmittel ein teildurchlässiger Retroreflektor zur Bestimmung eines Strahlversatzes des auf den ersten PSD auftreffenden, reflektierten Laserstrahls sein. Dieser kann in Form eines Einzelreflektors, wie beispielsweise eines Prismas oder eines Corner Cubes ausgestaltet sein, beispielsweise ein teilentspiegelter Tripelspiegel - wie in der WO 01/09642 A1 oder in der EP 0 405 423 A2 beschrieben -, oder alternativ als eine retroreflektierende Folie oder ein starrer Rückstrahler aus Kunststoff und insbesondere zusammengesetzt aus Einzelprismen oder einzelnen reflektierenden Kugeln ausgebildet, wie in der Europäischen Patentanmeldung mit dem Aktenzeichen EP12198763.0 beschrieben. Vorteilhaft ist die Herstellung solcher aus kleinen Einzelreflektoren bestehenden Retroreflektoren mit relativ niedrigem Aufwand und daher auch entsprechend niedrigen Produktkosten verbunden, insbesondere wenn es sich dabei um in grossen Massen vertriebene Erzeugnisse handelt. Insbesondere kann ein solcher Retroreflektor direkt auf der PSD-Oberfläche angeordnet sein.

In einer weiteren Ausführungsform ist das optische Element ein Strahlteiler, und die Kalibrierungsvorrichtung weist zusätzlich einen Retroreflektor oder einen Planspiegel auf. Dabei sind die zweite PSD und der Retroreflektor oder der Planspiegel vermittels des Strahlteilers von dem Laserstrahl dadurch gleichzeitig anzielbar, dass der Strahlteiler den Laserstrahl anteilig auf beide Elemente weiterleitet.

In einer weiteren Ausführungsform weist die Kalibrierungsvorrichtung an der Basis ein Reflexionsmittel auf, auf welches Messstrahlung von der Strahllenkeinheit zur Reflexion der Messstrahlung als reflektierter Messstrahlung auf den ersten positionssensitiven Flächendetektor emittierbar ist, insbesondere wobei das Reflexionsmittel ein Retroreflektor ist und insbesondere wodurch ein Servokontrollpunkt als Teil der Kalibrierungsparameter bestimmbar ist.

Als Reflexionsmittel kommen für die genannten Ausführungsformen insbesondere Planspiegel, Retroreflektoren in Form von Einzelreflektoren und retroreflektierende Folien in Frage.

In einer weiteren Ausführungsform ist das optische Element eine optische Linse, mittels derer die Messstrahlung scharf und insbesondere punktförmig auf dem zweiten PSD abgebildet wird.

Alternativ oder zusätzlich zur oben beschriebenen Anordnung eines optischen Elementes vor dem zweiten PSD kann auch der PSD teildurchlässig für die Strahlung ausgestaltet und vor einem Retroreflektor oder einem Planspiegel angeordnet sein. Auch eine Kombination mehrerer optischer Elemente ist möglich, insbesondere bei Verwendung eines Strahlteilers.

Ein weiterer Gegenstand der Erfindung ist ein Selbstkalibrierungsverfahren für einen erfindungsgemässen Lasertracker. Der Lasertracker weist einen stationären Teil mit einer Basis, einen gegenüber der Basis um eine Vertikalachse rotierbaren Teil (Stütze) und eine zusammen mit der Stütze drehbare Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf. Vorzugsweise ist an der Basis ein Neigungssensor zur Bestimmung einer Neigung in einer Horizontalrichtung und einer zur Horizontalrichtung senkrechten Vertikalrichtung angeordnet. Des Weiteren weist der Lasertracker eine Kippachse und eine Stehachse auf. In der Strahllenkeinheit ist ein Strahlteiler zur Umlenkung eines von dem Zielpunkt oder dem Reflektor zurückkehrenden Laserstrahls auf einen ersten in der Strahllenkeinheit integrierten PSD integriert.

Als Teilschritt des Verfahrens wird optional mit dem Neigungssensor eine Neigung der Basis in einer Horizontalrichtung und einer zur Horizontalrichtung senkrechten Vertikalrichtung bestimmt.

Erfindungsgemäss weist das Verfahren als weitere Schritte auf:

- Aussenden eines Laserstrahls von der Strahllenkeinheit auf einen zweiten PSD, der an der Basis oder an der Stütze angebracht ist,
- Bestimmen eines Auftreffpunkts des Laserstrahls auf dem zweiten PSD und
- Bestimmen von Kalibrierungsparametern bezüglich einer Position und/oder Richtung des Laserstrahls basierend auf dem bestimmten Auftreffpunkt.

In einer bevorzugten Ausführungsform wird Messstrahlung auch auf ein Reflexionsmittel ausgesendet, insbesondere gleichzeitig. Dabei trifft ein erster Teil der Messstrahlung auf den zweiten PSD auf, und ein zweiter Teil der Messstrahlung wird vom Reflexionsmittel als reflektierte Messstrahlung auf den ersten positionssensitiven Flächendetektor reflektiert. Das Reflexionsmittel kann sowohl einen Retroreflektor als auch einen Planspiegel aufweisen. Das Verfahren beinhaltet dann auch ein Bestimmen eines Auftreffpunkts des Laserstrahls auf dem ersten PSD.

Gemäss einer bevorzugten Ausführungsform der Erfindung weist dieses Reflexionsmittel einen aus vielen Einzelprismen bestehenden Retroreflektor auf, wie in der Europäischen Patentanmeldung mit dem Aktenzeichen EP12198763.0 beschrieben. Gemäss dieser Ausführungsform des erfindungsgemässen Verfahrens wird durch eine entsprechende Bewegung der Strahllenkeinheit zeitlich sequentiell ein zweidimensionaler Verlauf des Auftreffpunkts des Laserstrahls auf einer Oberfläche des Retroreflektors, insbesondere mit einer zweidimensional kreisartigen oder schlaufenartigen geometrischen Kontur, erzeugt. Messdaten von sequentiell erfolgenden Reflexionen an im Strahlengang bewegten Einzelreflektoren des Retroreflektors werden gemittelt. Vorteilhaft können durch eine solche Führung des eingestrahlten Laserstrahls auf den aus vielen Einzelreflektoren bestehenden Reflektor nachteilige Effekte durch Fehlreflexionen oder sogar Ausfall von Reflexionen an nicht perfekt ausgebildeten Oberflächen des Retroreflektors vermindert oder sogar eliminiert werden.

In einer Ausführungsform weist das Verfahren als weiteren Schritt ein Erzeugen

- eines Schattenwurfs mittels einer Lochblende auf,

- eines Interferenzmusters mittels eines optischen Gitters auf und/oder

- einer scharfen Abbildung der Messstrahlung auf dem zweiten PSD einer optischen Linse auf.

In einer weiteren Ausführungsform weist das Verfahren als weiteren Schritt ein Bewegen der Messstrahlung in einem Raster über eine in Strahlrichtung der Messstrahlung vor dem zweiten positionssensitiven Flächendetektor angeordnete Lochblende auf, insbesondere zum Ermitteln einer Intensitätsverteilung innerhalb der Messstrahlung und/oder eines Schwerpunkts der Messstrahlung auf dem zweiten PSD.

In einer weiteren Ausführungsform weist das Verfahren als weitere Schritte auf:

- ein Aussenden von Messstrahlung auf einen Retroreflektor,

- ein Erzeugen einer Retroreflexion einer auf dem Retroreflektor auftreffenden Messstrahlung als einer reflektierten Messstrahlung,

- ein Bestimmen eines Auftreffpunktes der von dem Retroreflektor reflektierten Messstrahlung auf dem ersten PSD, und

- ein Bestimmen eines Servokontrollpunkts.

In einer weiteren Ausführungsform weist das Verfahren als weiteren Schritt ein gleichzeitiges Aussenden der Messstrahlung auf den zweiten PSD und auf ein Reflexionsmittel auf, wobei ein erster Teil der Messstrahlung auf den zweiten PSD auftrifft, und ein zweiter Teil der Messstrahlung vom Reflexionsmittel als reflektierte Messstrahlung auf den ersten PSD reflektiert wird. Das Reflexionsmittel kann insbesondere einen Retroreflektor oder einen Planspiegel aufweisen, und ausserdem für die Messstrahlung teildurchlässig gestaltet sein.

In einer weiteren Ausführungsform weist das Verfahren eine Zweilagenmessung auf, in deren Rahmen das Aussenden der Messstrahlung auf den zweiten PSD in einer ersten und einer zweiten Ausrichtung der Strahllenkeinheit erfolgt. Dabei ist die Strahllenkeinheit in der zweiten Ausrichtung gegenüber der ersten Ausrichtung bezüglich des Horizontalschwenkwinkels insbesondere um 180° gedreht. Die Zweilagenmessung umfasst ausserdem ein Bestimmen des Auftreffpunkts der Messstrahlung auf dem zweiten PSD für beide Ausrichtungen der Strahllenkeinheit.

Der erfindungsgemässe Lasertracker und das erfindungsgemässe Selbstkalibrierungsverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1          einen erfindungsgemässen Lasertracker und ein Messhilfsmittel;

Fig. 2          einen erfindungsgemässen Lasertracker in einer Frontansicht;

Fig. 3a-b     eine Verwendung eines Retroreflektors als Kalibrierungsvorrichtung zur Bestimmung eines Strahlversatzes des auf den ersten PSD auftreffenden, zurückkehrenden Laserstrahls;

Fig. 4          eine erste Ausführungsform der erfindungsgemässen Kalibrierungsvorrichtung, aufweisend einen zweiten PSD;

Fig. 5a-b     eine Zweilagenmessung zur Bestimmung eines Zielachsen-Richtungsfehlers des eingestrahlten Laserstrahls mit der ersten Ausführungsform der erfindungsgemässen Kalibrierungsvorrichtung;

Fig. 6a-b     eine Zweilagenmessung zur Bestimmung eines Zielachsen-Richtungsfehlers des eingestrahlten Laserstrahls mit einer zweiten Ausführungsform der erfindungsgemässen Kalibrierungsvorrichtung, aufweisend einen zweiten PSD hinter einem halbdurchlässigen Planspiegel;

Fig. 7a-b     eine Bestimmung eines Zielachsen-Richtungsfehlers des eingestrahlten Laserstrahls mit einer dritten Ausführungsform der erfindungsgemässen Kalibrierungsvorrichtung, aufweisend einen zweiten PSD hinter einer Lochblende;

Fig. 8a-b     einen Lasertracker mit einer vierten Ausführungsform der erfindungsgemässen Kalibrierungsvorrichtung, aufweisend einen zweiten PSD und einen Retroreflektor, die in die Basis integriert sind; und

Fig. 9a-d     einen Lasertracker mit vier Varianten einer fünften Ausführungsform der erfindungsgemässen Kalibrierungsvorrichtung, aufweisend einen zweiten PSD und einen Planspiegel bzw. einen Retroreflektor, die gleichzeitig anzielbar angeordnet sind.

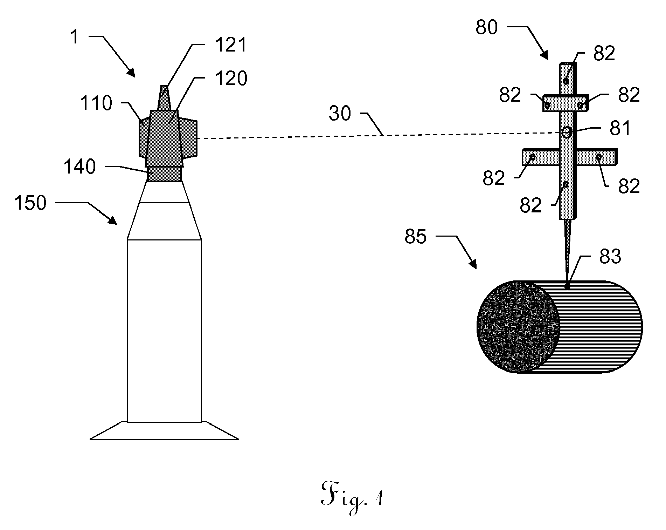

Figur 1 zeigt einen erfindungsgemässen Lasertracker 1, umfassend eine Basis 140, eine darauf angebrachte Stütze 120 mit einem Griff 121 und eine an zwei (nicht dargestellten) Holmen der Stütze 120 gelagerte Strahllenkeinheit 110. Der abgebildete Lasertracker 1 ist auf einem Stativ 150 angeordnet und misst mittels eines Laserstrahles 30 die Distanz zu einem auf einem Messhilfsmittel 80 befindlichen Retroreflektor 81. Das Messhilfsmittel 80 - hier beispielhaft als Messtaster ausgeführt - umfasst weiterhin eine Anzahl Zielmarkierungen 82, beispielsweise in Form von reflektierenden oder selbstleuchtenden Lichtpunkten, sowie einen Messkopf 83 zum Plazieren auf einem zu vermessenden Zielpunkt eines Zielobjektes 85.

Der dargestellte Lasertracker 1 beinhaltet eine Messkamera, die insbesondere als fokussierbares Vario-Kamerasystem mit variabler Vergrösserung ausgestaltet ist, um die auf dem Messhilfsmittel 80 angeordneten Zielmarkierungen 82 zu erfassen. Anhand der von der Messkamera aufgenommenen Positionen der Zielmarkierungen 82 ist die räumliche Ausrichtung des Messhilfsmittels 80 bestimmbar.

Um Bewegungen des Messhilfsmittels 80 zu erkennen und nachvollziehen zu können, sodass der Laserstrahl 30 auf den Retroreflektor 81 ausgerichtet bleibt, weist der Lasertracker 1 einen positionssensitiven Detektor (PSD) oder einen anderen optoelektronischen Sensor auf, insbesondere einen Tracking-Flächensensor, wie er beispielsweise in der WO 2007/079600 A1 geoffenbart ist.

Der PSD ist vorzugsweise in der Strahllenkeinheit 110 angeordnet und ermöglicht einer Auswerte- und Steuereinheit durch ein Erfassen der Ausrichtung des von einem Ziel, insbesondere dem Retroreflektor 81, reflektierten Laserstrahls das Nachführen der Ausrichtung des Laserstrahls 30. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden.

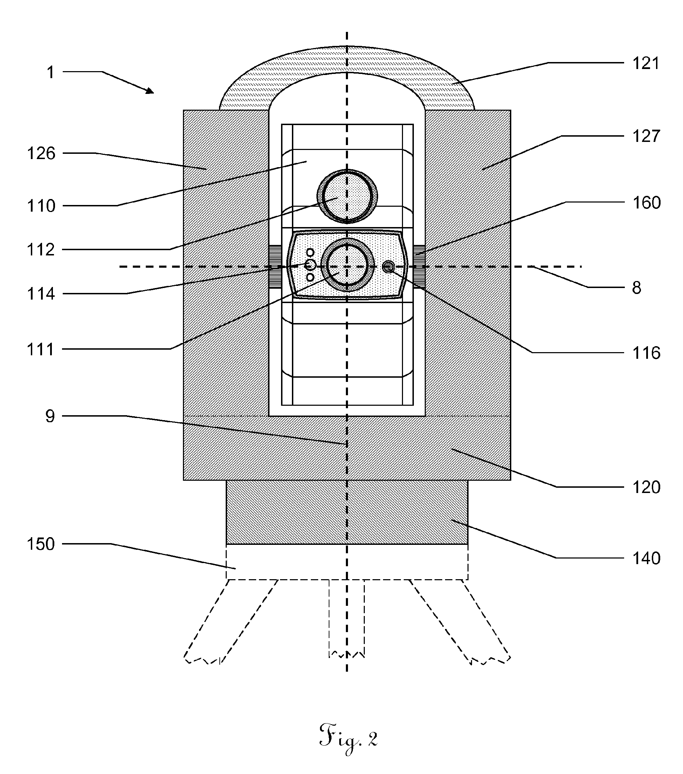

Figur 2 zeigt eine beispielhafte Ausführungsform eines erfindungsgemässen Lasertrackers 1 in einer Frontalansicht. Der Lasertracker 1 umfasst eine Basis 140, die auf einer Haltevorrichtung befestigbar ist, hier dargestellt in Form eines Stativs 150. Auf der Basis 140 ist eine Stütze 120 um die Vertikalachse 9 drehbar gelagert angebracht. Die Stütze 120 weist einen ersten Holm 126 und einen zweiten Holm 127 auf, die von der Stütze 20 aus nach oben ragen und an welchen eine Strahllenkeinheit 110 mittels einer Welle 160 um die Horizontalachse 8 kippbar gelagert ist. An den beiden Holmen 126,127 ist ein Griff 121 für den Transport und die Handhabung des Lasertrackers 1 angebracht. Der Griff 121 kann fest mit den Holmen 126,127 verbunden sein, beispielsweise aus einem Guss mit diesen hergestellt oder angeschweisst sein, so dass er als zusätzlich stabilisierendes Element für die Holme 126,127 dient, insbesondere hinsichtlich eines Verbiegens.

An der Strahllenkeinheit 110 sind in dieser beispielhaften Ausführungsform mehrere Optiken vorgesehen, insbesondere eine Optik 112 einer Messkamera, sowie eine Laseraussende- und -empfangsoptik 111 einer optischen Distanzmessvorrichtung. Des weiteren weist die Strahllenkeinheit 110 vorzugsweise eine Optik einer Lokalisierungskamera 114 zur Groblokalisierung des Messhilfsmittels 80 und eine Optik einer Übersichtskamera 116 zur Bereitstellung von Bildern für einen Benutzer auf.

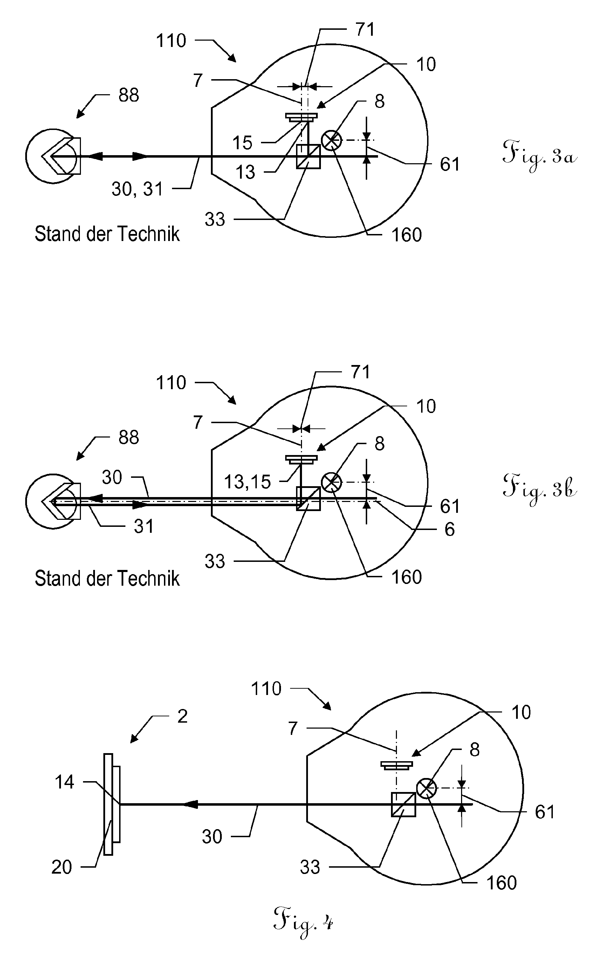

Die Figuren 3a und 3b illustrieren die bekannte Verwendung einer Kalibrierungsvorrichtung in Form eines grossen Einzelreflektors 88, wie beispielsweise eines Prismas oder eines Corner Cubes, zur Bestimmung eines Strahlversatzes 61 des auf den positionssensitiven Detektor (PSD) 10 auftreffenden, zurückkehrenden Laserstrahls 31 gegenüber dem Detektorzentrum 15, sowie die Nachteile, die sich bei dieser Verwendung ergeben.

Gemäss der Ausrichtung der ausgesandten Messstrahlung 30 nach Figur 3a tritt diese exakt durch die Mitte des Strahlteilers 33 hindurch und trifft auch exakt im Zentrum des Einzel-Retroreflektors 88 derart auf, dass sie in sich als eine reflektierte Messstrahlung 31 durch den Strahlteiler 33 auf den PSD 10 mit einem Detektorzentrum 15 umgelenkt wird.

Auf dem PSD 10 trifft die reflektierte Messstrahlung 31 an einem in der Regel von dem Detektorzentrum 15 verschiedenen Punkt 13 auf. Wenn die Richtung und Positionierung der ausgesandten Messstrahlung 30 auf den Retroreflektor eingeregelt sind, ist dieser Auftreffpunkt mit einem sogenannten Servokontrollpunkt identisch, dessen genaue Bestimmung für weitere Massnahmen und Messungen zur Selbstkalibrierung des Lasertrackers wesentlich ist. Der dermassen bestimmte Servokontrollpunkt weist in der Regel einen Versatz 71 zum Detektorzentrum 15 auf.

Angegeben sind in Figur 3a des Weiteren eine Teleskop-Drehachse 8, um welche die Strahllenkeinheit 110 drehbar ist, ein Strahlversatz 61 zwischen einer Zentralachse durch die Drehachse 8 und dem zurückkehrenden Laserstrahl 31 und die Achsen 6 und 7. Gemäss der Situation nach Figur 3a können der Versatz 71 und der Strahlversatz 61 separat voneinander bestimmt werden.

Figur 3b illustriert eine Situation, gemäss derer der ausgesandte Laserstrahl 30 nicht mittig auf dem Einzelreflektor 88 auftrifft, aber der Abstand 71 auf dem PSD 10 und der Strahlversatz 61 der Zielachse zusammen korreliert bekannt sind. Gemäss dieser Situation trifft der ausgesandte Laserstrahl 30 nicht mittig auf dem Zentrum des Einzel-Retroreflektors 88 auf, sondern auf einer ersten seitlichen Reflexionsfläche, und wird um dessen Zentrum herumgelenkt auf eine gegenüberliegende zweite (und dritte) Reflexionsfläche, von wo er als zurückkehrender Laserstrahl 31 parallel versetzt zum ausgesandten Laserstrahl 30 reflektiert wird. In dem dargestellten Spezialfall trifft er dann mit einem Wert Null des Versatzes 71 zum Detektorzentrum 15 dem PSD 10 auf.

Der Versatz 71 *("PSDOffset")* und der Strahlversatz 61 *("ZAAbst")* können durch einen beide Einzelparameter enthaltenden Gesamtversatz *("Offset'")* auf dem PSD 10 bestimmt und dann durch ein einfaches Gleichungssystem voneinander separiert werden:

$$Richtung_{korrigiert} = \arctan(\frac{PSDOffset - ZAAbst}{2 \times Dist}) - Richtungsfehler \qquad (1)$$

$$PSDOffset - ZAAbst = Offset' \qquad (2)$$

Solange PSD-Offset (Versatz 71) und Zielachsenabstand (Strahlversatz 61) klein genug sind, bleibt dabei die Strahlüberdeckung zwischen ausgehenden und zurückkommenden Strahl bei einem Einsatz von Laserinterferometern (IFM) und absoluten Distanzmessern (ADM) für zuverlässige Messungen ausreichend gut. Für eine genaue Kalibrierung wird aber ein solcher Fall bevorzugt, bei dem kein Versatz auftritt.

Figur 4 zeigt eine erste Ausführungsform der erfindungsgemässen Kalibrierungsvorrichtung 2. Im Gegensatz zur in den Figuren 3a-b gezeigten Anordnung, weist diese Kalibrierungsvorrichtung 2 einen zweiten PSD 20 anstelle des Einzelreflektors 88 auf.

Gemäss der Ausrichtung der ausgesandten Messstrahlung 30 nach Figur 4 tritt diese exakt durch die Mitte des Strahlteilers 33 hindurch und trifft am Auftreffpunkt 14 auf dem zweiten PSD 20 auf. Insbesondere für eine Bestimmung der Zielachsenabstände kann der zweite PSD 20 hochauflösend als ein positionsempfindlicher Detektor oder eine Zeilenkamera mit einer grossen Vielzahl von Lichtnachweiselementen (Pixels), aber auch als eine Photodiode mit einem lichtempfindlichen Bereich geringeren Durchmessers als der eingestrahlten Messstrahlung 30, wobei ein maximales Messsignal in der Strahlmitte ermittelt wird, als eine Vierquadrantendiode, als zwei rechtwinklig zueinander angeordnete Zeilenkameras oder als eine einzige Zeilenkamera mit einem Gitter ausgebildet sein.

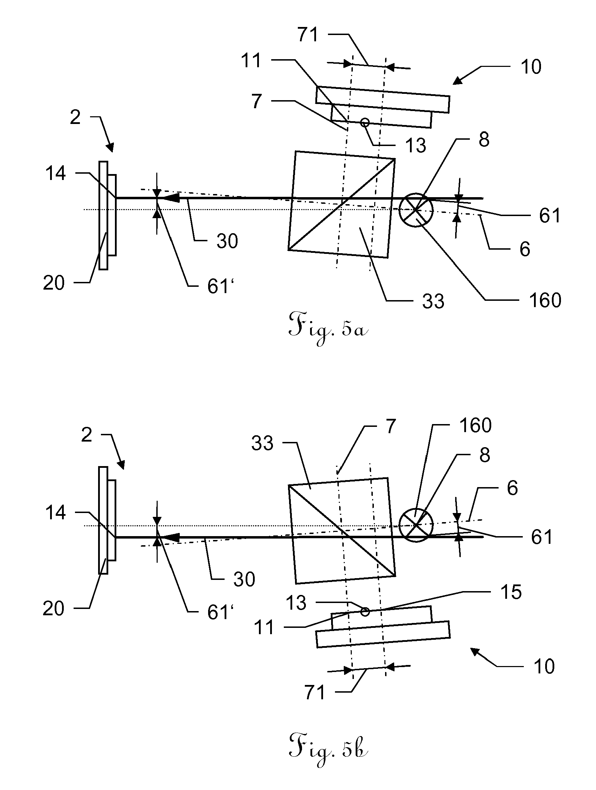

In den Figuren 5a-b wird eine Zweilagenmessung mit der ersten Ausführungsform der erfindungsgemässen Kalibrierungsvorrichtung 2 aus Figur 4 gezeigt.

Zur Bestimmung der Abstände der Zielachse zu einer Stehachse und einer Kippachse ist aus dem Stand der Technik eine Zweilagenmessung mit einem am stationären Teil befestigten Prisma oder Corner Cube als Retroreflektor bekannt. Dabei werden zuvor bestimmte Werte für Zielachsen-Richtungsfehler, beruhend aus den in einer Zweilagenmessung bestimmten Winkelunterschieden und der Abstand zum Retroreflektor als bekannt vorausgesetzt. Erfindungsgemäss ist es jedoch vorteilhaft - bei einer ansonsten gleichartigen Systemkonfiguration und -anordnung - den Einzelreflektor, wie in Figur 4 gezeigt, durch einen zweiten PSD 20 zu ersetzen. Erfindungsgemäss gibt es für eine derartige Konfiguration zur Bestimmung der Zielachsenabstände 61 zwei alternative Vorgehensweisen:

Zum einen, gemäss der Darstellungen in Figuren 5a-b, die Anzielung eines für die Messungen in den beiden Lagen identischen Ortspunkts 12 auf dem zweiten PSD 20 und Bestimmung der Zielachsenabstände unter Berücksichtigung der an den Winkelencodern gemessenen Richtungen.

Zum anderen ein zweimaliges freies Positionieren der Messstrahlung 30 auf dem zweiten PSD 20, verbunden mit einer Bestimmung des Abstands des jeweiligen Auftreffpunkts auf dem zweiten PSD 20 zu dessen Detektorzentrum. Voraussetzung für diese zweite Vorgehensvariante ist eine vorangegangene Kalibrierung mit einer Bestimmung von Abbildungsmassstab und Verdrehung, was mittels Abrasterns der Oberfläche des zweiten PSD 20 mit der Messstrahlung 30, mittels deren Führung durch Bewegung der Stahllenkeinheit 110 um die Steh- und Kippachse durchführbar ist.

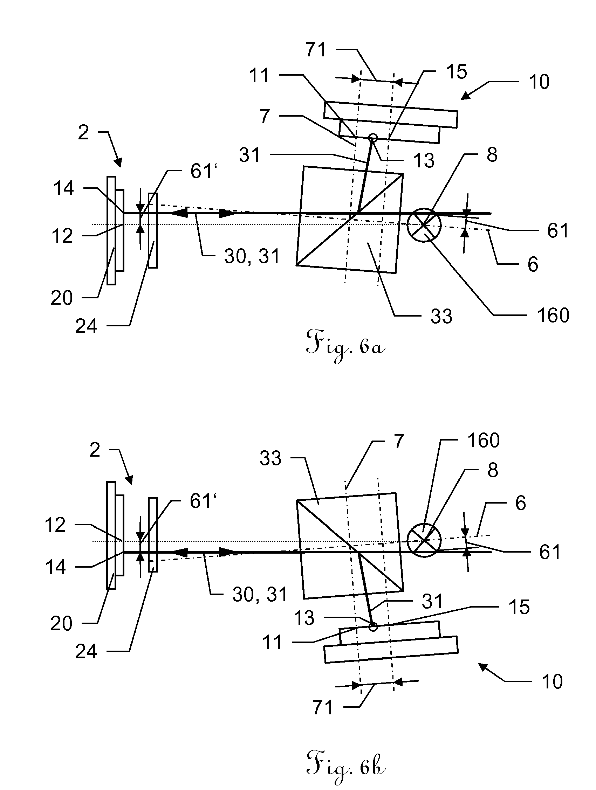

Eine Weiterentwicklung der Erfindung als eine besonders vorteilhaften Ausführungsform ermöglicht eine Bestimmung der Zielachsenabstände in Verbindung mit, und nicht unabhängig von bzw. nach, einer Bestimmung des Zielachsen-Richtungsfehler, gemäss der Illustrationen durch Fig. 6a-b. Dazu ist in Strahlrichtung der Messstrahlung 30 vor dem zweiten PSD 20 ein teilweise lichtdurchlässiger Planspiegel 24 angeordnet, auf den die Messstrahlung 30 senkrecht eingestrahlt wird. Gemäss dieser Ausführungsform der Erfindung werden bei der Bestimmung der Zielachsen-Richtungsfehler auf dem Planspiegel 24 zugleich die zu bestimmenden Zielachsenabstände erkennbar, vorausgesetzt, dass die Zielachsen-Richtungsfehler eher gering sind, und aus den Signalen zu den Auftreffpunkten der teilweise durchtretenden und auf den zweiten PSD 20 auftreffenden Messstrahlung 30 können dann die Zielachsenabstände in einer Weise wie vorangehend zu Figuren 5a-b beschrieben bestimmt werden. Da die Messstrahlung 30 auf den teildurchlässigen Planspiegel 24 senkrecht auftrifft, ergibt sich kein zusätzlicher Versatz durch einen Planplatten-Effekt, d. h. Strahlversatz 61' und Strahlversatz 61 sind gleich gross.

Für diese Ausführungsform der Erfindung ist ebenfalls eine vorangegangene Kalibrierung mit einer Bestimmung von Abbildungsmassstab und Verdrehung erforderlich, was mittels Abrasterns der Oberfläche der zweiten PSD 20 mit der Messstrahlung 30, mittels deren Führung durch Bewegung der Strahllenkeinheit 110 um die Steh- und Kippachse, durchführbar ist. Ausserdem muss die PSD 20 hinsichtlich ihrer lichtempfindlichen Oberfläche gross genug ausgebildet sein, um bei den grössten zu erwartenden Zielachsenabständen die eingestrahlte Messstrahlung 30 noch vollständig erfassen zu können. Vorteilhaft ist für diese Ausführungsform der Erfindung der zweite PSD 20 in Strahlrichtung möglichst nahe hinter dem teildurchlässigen Planspiegel 24 angeordnet, der bei einer solchen Konfiguration auch die Funktion eines Schutzglases vor dem zweiten PSD 20 erfüllt. Insbesondere kann die Oberfläche des zweiten PSD 20 auch teildurchlässig verspiegelt sein.

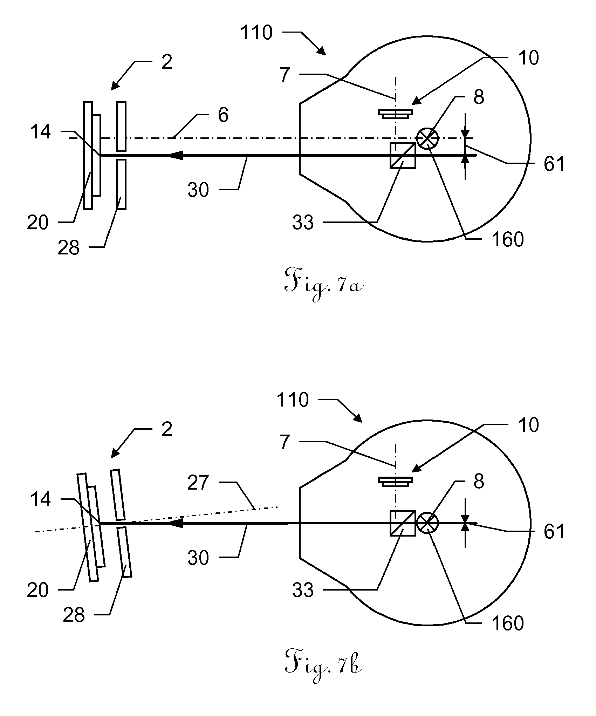

Die Figuren 7a-b zeigen eine dritte Ausführungsform der erfindungsgemässen Kalibrierungsvorrichtung 2, aufweisend einen zweiten PSD 20 hinter einer Lochblende 28, die als Kollimator dient. Blende 28 und PSD 20 sind vorzugsweise zueinander wie in einer Lochkamera angeordnet. Die Richtung der Zielachse 6 kann dabei unabhängig von einem eventuell vorhandenen Versatz 61 der Zielachse 6 bestimmt werden. Vorzugsweise ist die Öffnung der Blende 28 kleiner als der Strahldurchmesser der Messstrahlung 30.

Vorteilhaft werden darüber hinaus keine hohen Ansprüche an eine exakte Ausrichtung der Blendenachse 27 der Lochkamera gestellt, wie aus Figur 7b ersichtlich ist, da mit einer ausreichend dimensionierten PSD 20 eine nicht exakt orthogonale Ausrichtung zur Zielachse 6 kompensiert werden kann.

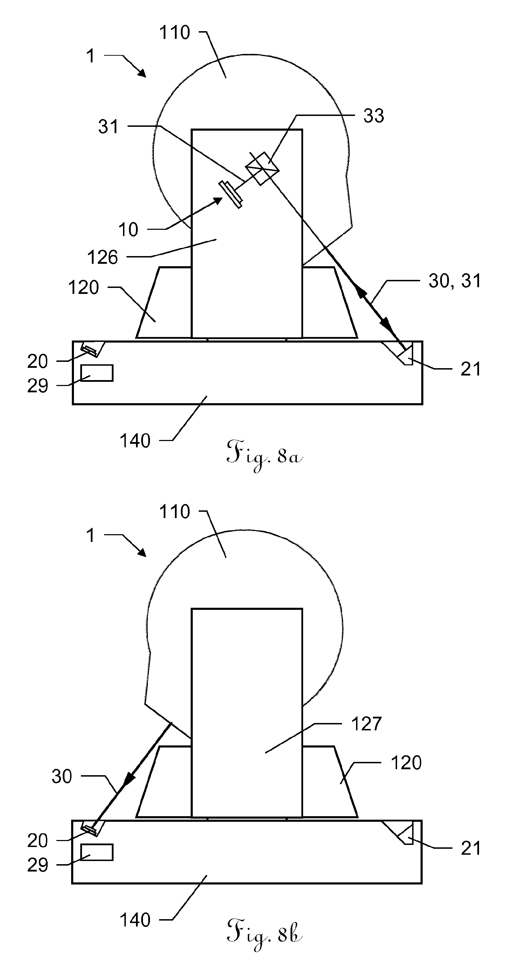

Die Figuren 8a-b zeigen schematisch einen erfindungsgemässen Lasertracker 1 gemäss Figuren 1 und 2 mit der mit der rotierbaren Stütze 120 verbundenen Strahllenkeinheit 110 und der stationären Basis 140. Der Lasertracker 1 weist eine vierte Ausführungsform der erfindungsgemässen Kalibrierungsvorrichtung auf. Diese weist einen zweiten PSD 20 und einen Retroreflektor 21 auf, die beide in die Basis 140 integriert sind.

In Figur 8a wird eine von einer (nicht dargestellten) Laserlichtquelle bereitgestellte Messstrahlung 30 durch die Strahllenkeinheit 110 auf einen in der Basis 140 integrierten Retroreflektor 21 ausgesendet, der gemäss der hier dargestellten Ausführungsform als ein Einzelreflektor ausgebildet ist. Dabei kann es sich beispielsweise um ein Prisma oder einen "Corner Cube" handeln. Von dem Retroreflektor 21 wird die Messstrahlung 30 in der dargestellten Strahlausrichtung in sich als reflektierte Messstrahlung 31 zu einem in der Strahllenkeinheit 110 integrierten Strahlteiler 33 reflektiert. Von dem Strahlteiler 33 wird die reflektierte Messstrahlung 31 auf einen in der Strahllenkeinheit 110 integrierten ersten PSD 10 umgelenkt. Zusätzlich ist in der Basis 140 ein zweiter PSD 20, verbunden mit einer Datenverarbeitungseinheit 29 der Auswerte- und Steuereinheit des Lasertrackers 1 für eine Bestimmung einer Strahlausrichtung bezüglich Horizontal- und Vertikalrichtung, angeordnet.

Die Darstellung gemäss Figur 8a illustriert eine Anordnung für eine Bestimmung eines Strahlversatzes der auf den ersten PSD 10 auftreffenden, reflektierten Messstrahlung 31 gegenüber dem Detektorzentrum und/oder eines Versatzes bzw. Abstands zwischen einer mit der Messstrahlung 30 assoziierten Zielachse für eine Selbstkalibrierung der Justierung des Lasertrackers 1 und insbesondere seiner Strahllenkeinheit 110.

Dabei entspricht die Verwendung eines Corner Cube als Retroreflektor 21 einer Anordnung zur Bestimmung eines Strahlversatzes, wie sie beispielsweise aus den Dokumenten US 2009/0109426 und WO 2005/026772 bekannt ist.

Figur 8b illustriert in einer ansonsten der Darstellung von Figur 8a entsprechenden Anordnung die Ausrichtung der Strahllenkeinheit 110 zur Aussendung der Messstrahlung 30 auf den zweiten PSD 20 zur Bestimmung eines Richtungsfehlers der Zielachse der ausgesandten Messstrahlung 30, durch Bestimmung eines Auftreffpunkts der Messstrahlung 30 auf diesem zweiten PSD 20.

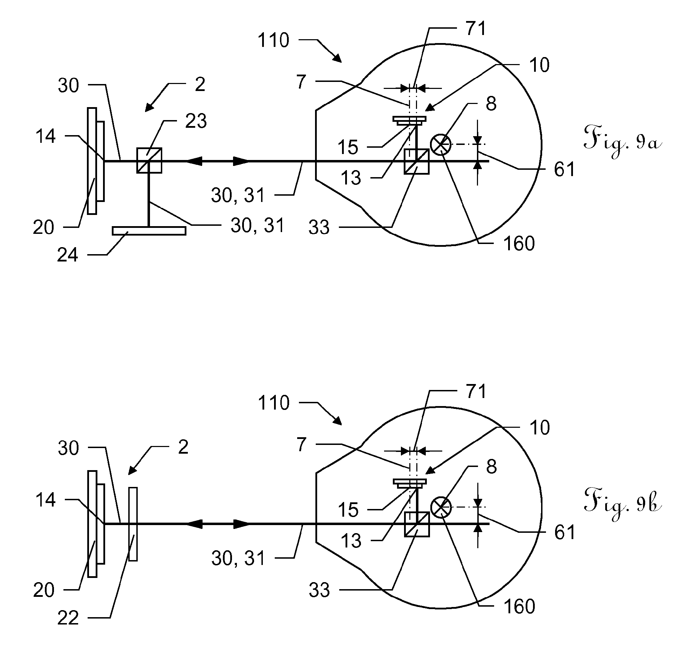

In den Figuren 9a-c werden drei beispielhafte Varianten einer fünften Ausführungsform der erfindungsgemässen Kalibrierungsvorrichtung gezeigt. In dieser Ausführungsform weist die Kalibrierungsvorrichtung 2 einen zweiten PSD 20 und ein Reflexionsmittel auf, wobei die beiden Elemente derart zueinander angeordnet sind, dass sie mit der Messstrahlung 30 gleichzeitig anzielbar sind. Das Reflexionsmittel kann jeweils als ein Planspiegel 24 oder als ein Retroreflektor 22 ausgestaltet sein.

Vorzugsweise kann ein Retroreflektor 22 in dieser Ausführungsform - wie in der Europäischen Patentanmeldung mit dem Aktenzeichen EP12198763.0 beschrieben - zur Erzeugung einer versatzfreien, koaxialen Retroreflexion einer auf ihm auftreffenden Messstrahlung 30 ausgebildet sein, ohne dabei einen Versatz der reflektierten Messstrahlung 31 zur Richtung der auftreffenden Messstrahlung 30 zu erzeugen. Insbesondere ist der Retroreflektor 22 dazu als eine retroreflektierende Folie oder ein starrer Rückstrahler aus Kunststoff ausgebildet, und/oder weist eine Vielzahl reflektierender Kugeln und/oder Prismen auf.

In Figur 9a ist eine erste Variante dargestellt, in welcher die Kalibrierungsvorrichtung 2 einen zweiten Strahlteiler 23 aufweist, der die Messstrahlung 30 auf den zweiten PSD 20 und einen Planspiegel 24 leitet. Die vom Planspiegel 24 reflektierte Messstrahlung 31 wird über den zweiten Strahlteiler 23 und den ersten Strahlteiler 33 auf den ersten PSD 10 geleitet.

In Figur 9b ist eine zweite Variante dargestellt, in der ein als eine retroreflektierende Folie oder ein starrer Rückstrahler ausgebildete Retroreflektor 22 teildurchlässig für die Messstrahlung 30 gestaltet ist, sodass ein erster Teil der Messstrahlung 30 auf den zweiten PSD 20 gelangt, und ein zweiter Teil der Messstrahlung 30 als reflektierte Messstrahlung 31 vom Retroreflektor 22 über den ersten Strahlteiler 33 auf den ersten PSD 10 reflektiert wird.

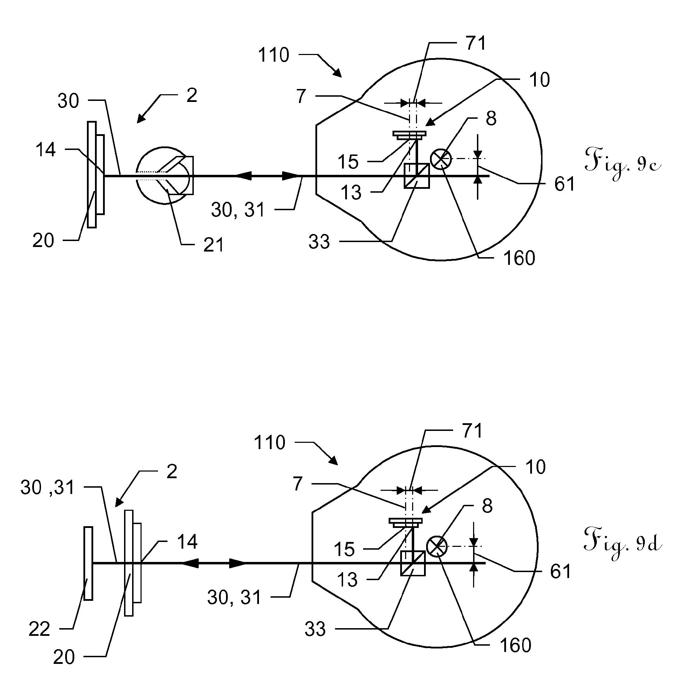

In Figur 9c ist eine dritte Variante dargestellt, in der ein Retroreflektor 21 in Form eines teilentspiegelten Tripelspiegels vor dem zweiten PSD 20 positioniert ist, sodass ein erster Teil der Messstrahlung 30 auf den zweiten PSD 20 gelangt, und ein zweiter Teil der Messstrahlung 30 als reflektierte Messstrahlung 31 vom Retroreflektor 22 über den ersten Strahlteiler 33 auf den ersten PSD 10 reflektiert wird.

In Figur 9d ist eine vierte Variante dargestellt, in der der zweite PSD 20 teildurchlässig für die Messstrahlung 30 gestaltet ist, sodass ein Teil der auf den zweiten PSD 20 auftreffenden Messstrahlung 30 auf den Retroreflektor 22 gelangt und von diesem als reflektierte Messstrahlung 31 über den ersten Strahlteiler 33 auf den ersten PSD 10 reflektiert wird.

Es versteht sich, dass diese dargestellten Figuren nur mögliche Ausführungsbeispiele schematisch darstellen. Die verschiedenen Ansätze können ebenso miteinander sowie mit Verfahren und Geräten des Standes der Technik kombiniert werden.

## Patentansprüche

1. Lasertracker (1) zur Positionsbestimmung eines Ziels (80) sowie insbesondere zur fortlaufenden Verfolgung des Ziels (80), aufweisend

   • eine Strahlquelle zur Erzeugung von Messstrahlung (30),
   • eine eine Stehachse (9) definierende Basis (140),
   • eine Stütze (120), die eine im Wesentlichen orthogonal zur Stehachse (9) stehende Kippachse (8) definiert, wobei die Stütze (120) relativ zur Basis (140) um die Stehachse (9) motorisiert schwenkbar ist und ein Horizontalschwenkwinkel durch eine Ausrichtung der Stütze (120) relativ zur Basis (140) definiert wird,
   • eine um die Kippachse (8) relativ zur Stütze (120) motorisiert schwenkbare Strahllenkeinheit (110), wobei ein Vertikalschwenkwinkel durch eine Ausrichtung der Strahllenkeinheit (110) relativ zur Stütze (120) definiert wird, zur Emission und Ausrichtung der Messstrahlung (30) und zum Empfang von zumindest einem Teil der am Ziel (80) reflektierten Messstrahlung (31),
   • Winkelmessfunktionalität zur Bestimmung des Horizontalschwenkwinkels und des Vertikalschwenkwinkels,
   • Entfernungsmessfunktionalität,
   • einen ersten positionssensitiven Flächendetektor (10) und
   • eine Auswerte- und Steuereinheit zur Bestimmung eines Auftreffpunkts (13) der reflektierten Messstrahlung (31) auf dem Flächendetektor (10) zur Erzeugung eines Ausgangssignals zur Positionsbestimmung des Ziels (80) und insbesondere zur Steuerung einer Zielverfolgungsfunktionalität, wobei der Lasertracker (1) ausserdem eine Kalibrierungsvorrichtung (2) aufweist zur Verwendung mit einer Selbstkalibrierungsfunktionalität, im Rahmen derer Kalibrierungsparameter bezüglich einer Position und/oder Richtung der Messstrahlung (30) bestimmbar sind,

   **dadurch gekennzeichnet, dass**

   • die Kalibrierungsvorrichtung (2) an der Basis (140) einen zweiten positionssensitiven Flächendetektor (20) aufweist, auf welchen Messstrahlung (30) von der Strahllenkeinheit (110) emittierbar ist, und
   • die Auswerte- und Steuereinheit ausgestaltet ist zur Bestimmung eines Auftreffpunkts (14) von auf dem zweiten positionssensitiven Flächendetektor (20) auftreffender Messstrahlung (30), wodurch mindestens ein Teil der Kalibrierungsparameter bezüglich einer Position und/oder Richtung der Messstrahlung (30) bestimmbar ist.

2. Lasertracker (1) nach Anspruch 1,
   **dadurch gekennzeichnet, dass**
   im Rahmen der Selbstkalibrierungsfunktionalität durch den Lasertracker (1) eine Zweilagenmessung durchführbar ist, wobei im Rahmen der Zweilagenmessung Messstrahlung (30) auf den zweiten positionssensitiven Flächendetektor (20) in einer ersten und einer zweiten Ausrichtung der Strahllenkeinheit (110) emittierbar ist, insbesondere wobei die Strahllenkeinheit (110) in der zweiten Ausrichtung gegenüber der ersten Ausrichtung bezüglich des Horizontalschwenkwinkels um 180° gedreht ist.

3. Lasertracker (1) nach Anspruch 1 oder Anspruch 2,
   **dadurch gekennzeichnet, dass**

die Kalibrierungsvorrichtung (2) ein optisches Element aufweist, das in Strahlrichtung der Messstrahlung (30) vor dem zweiten positionssensitiven Flächendetektor (20) angeordnet ist, insbesondere wobei das optische Element

- an der Basis (140) in einer bekannten räumlichen Beziehung zum zweiten positionssensitiven Flächendetektor (20) bereitgestellt ist, und
- derart gestaltet und angeordnet ist, dass Kalibrierungsparameter bezüglich einer Richtung der Messstrahlung (30) bestimmbar sind.

4. Lasertracker (1) nach Anspruch 3,
**dadurch gekennzeichnet, dass**
das optische Element eine Lochblende (28) mit mindestens einer für die Messstrahlung (30) durchlässigen Öffnung aufweist, insbesondere wobei

- die Öffnung der Lochblende (28) kleiner ist als ein Durchmesser der Messstrahlung (30),
- der Lasertracker (1) zu einem Bewegen der Messstrahlung (30) in einem Raster über die Lochblende (28) ausgestaltet ist, und/oder
- die Lochblende (28) zur Erzeugung eines Interferenzmusters auf dem zweiten positionssensitiven Flächendetektor (20) ein optisches Gitter aufweist.

5. Lasertracker (1) nach Anspruch 4,
**dadurch gekennzeichnet, dass**
die Lochblende (28) zur Reflexion eines Teiles der Messstrahlung (30) auf den ersten positionssensitiven Flächendetektor (10) ein Reflexionsmittel (21, 22, 24) aufweist, insbesondere wobei das Reflexionsmittel (21, 22, 24)

- auf einer der Strahllenkeinheit (110) zugewandten Oberfläche der Lochblende (28) angebracht ist oder eine solche Oberfläche bildet, und/oder
- an die Öffnung der Lochblende (28) grenzt.

6. Lasertracker (1) nach Anspruch 3,
**dadurch gekennzeichnet, dass**
das optische Element zur Reflexion eines Teiles der Messstrahlung (30) als reflektierter Messstrahlung (31) auf den ersten positionssensitiven Flächendetektor (10)

- als ein für die Messstrahlung (30) teildurchlässiges Reflexionsmittel (21, 22, 24) oder
- als ein Strahlteiler (23), der dazu ausgestaltet ist, Messstrahlung (30) teilweise auf den zweiten positionssensitiven Flächendetektor (20) und teilweise auf ein Reflexionsmittel (21, 22, 24) zu leiten,

ausgestaltet ist.

7. Lasertracker (1) nach einem der vorhergehenden Ansprüche,
**dadurch gekennzeichnet, dass**
die Kalibrierungsvorrichtung (2) an der Basis (140) ein Reflexionsmittel (21, 22, 24) aufweist, auf welches Messstrahlung (30) von der Strahllenkeinheit (110) zur Reflexion der Messstrahlung (30) als reflektierter Messstrahlung (31) auf den ersten positionssensitiven Flächendetektor (10) emittierbar ist, insbesondere wodurch ein Servokontrollpunkt als Teil der Kalibrierungsparameter bestimmbar ist.

8. Lasertracker (1) nach einem der Ansprüche 5 bis 7, **dadurch gekennzeichnet, dass**
das Reflexionsmittel (21, 22, 24) mindestens aufweist

- einen Planspiegel (24),
- einen Retroreflektor (21), der als Prisma oder als Corner Cube ausgestaltet ist, oder
- einen Retroreflektor (22), der ausgebildet ist zur Erzeugung einer versatzfreien, koaxialen Retroreflexion einer auf ihm auftreffenden Messstrahlung (30), ohne dabei einen Versatz der reflektierten Messstrahlung (31) zur Richtung der auftreffenden Messstrahlung (30) zu erzeugen, insbesondere wobei der Retroreflektor (22) als eine retroreflektierende Folie oder ein Mikroprismen-Array, insbesondere aus Kunststoff oder Glas, ausgebildet ist, und/oder eine Vielzahl reflektierender Kugeln und/oder Prismen aufweist.

**9.** Lasertracker (1) nach einem der vorhergehenden Ansprüche,
**gekennzeichnet durch**

• eine erste Kamera (112) zur Erfassung der räumlichen Ausrichtung des Ziels (80), und
• mindestens eine zweite Kamera (114) zur Groblokalisierung des Ziels (80),

und/oder **dadurch**, dass

• die Messstrahlung (30) ein Laserstrahl ist, und
• der Lasertracker (1) einen Absolutdistanzmesser und/oder ein Interferometer aufweist.

**10.** Selbstkalibrierungsverfahren für einen Lasertracker (1), nach einem der Ansprüche 1 bis 9, wobei der Lasertracker mindestens aufweist:

• eine Strahlquelle zur Erzeugung von Messstrahlung (30),
• eine eine Stehachse (9) definierende Basis (140),
• eine Stütze (120), die eine im Wesentlichen orthogonal zur Stehachse (9) stehende Kippachse (8) definiert, wobei die Stütze (120) relativ zur Basis (140) um die Stehachse (9) motorisiert schwenkbar ist und ein Horizontalschwenkwinkel durch eine Ausrichtung der Stütze (120) relativ zur Basis (140) definiert wird,
• eine um die Kippachse (8) relativ zur Stütze (120) motorisiert schwenkbare Strahllenkeinheit (110), wobei ein Vertikalschwenkwinkel durch eine Ausrichtung der Strahllenkeinheit (110) relativ zur Stütze (120) definiert wird, zur Emission und Ausrichtung der Messstrahlung (30) und zum Empfang von zumindest einem Teil der am Ziel (80) reflektierten Messstrahlung (31), mit einem ersten positionssensitiven Flächendetektor (10) zur Bestimmung eines Auftreffpunkts (13) der reflektierten Messstrahlung (31) auf dem ersten positionssensitiven Flächendetektor (10) und zur Erzeugung eines Ausgangssignals zur Steuerung einer Zielverfolgungsfunktionalität, und
• eine Kalibrierungsvorrichtung (2) zur Verwendung mit einer Selbstkalibrierungsfunktionalität, im Rahmen derer Kalibrierungsparameter bezüglich einer Position und/oder Richtung der Messstrahlung (30) bestimmbar sind,

**dadurch gekennzeichnet, dass**
die Kalibrierungsvorrichtung (2) einen zweiten positionssensitiven Flächendetektor (20) an der Basis (120) aufweist, und das Verfahren mindestens aufweist

• ein Aussenden von Messstrahlung (30) auf den zweiten positionssensitiven Flächendetektor (20),
• ein Bestimmen eines Auftreffpunkts (14) der Messstrahlung (30) auf dem zweiten positionssensitiven Flächendetektor (20), und
• ein Bestimmen von Kalibrierungsparametern bezüglich einer Position und/oder Richtung der Messstrahlung (30).

**11.** Selbstkalibrierungsverfahren nach Anspruch 10,
**gekennzeichnet durch**

• ein Erzeugen eines Schattenwurfs, eines Interferenzmusters und/oder einer scharfen Abbildung der Messstrahlung auf dem zweiten positionssensitiven Flächendetektor (20), insbesondere mittels einer Lochblende (28), eines optischen Gitters und/oder einer optischen Linse, und/oder
• einem Bewegen der Messstrahlung (30) in einem Raster über eine in Strahlrichtung der Messstrahlung (30) vor dem zweiten positionssensitiven Flächendetektor (20) angeordnete Lochblende (28), insbesondere zum Ermitteln einer Intensitätsverteilung innerhalb der Messstrahlung (30) und/oder eines Schwerpunkts der Messstrahlung (30) auf dem zweiten positionssensitiven Flächendetektor (20).

**12.** Selbstkalibrierungsverfahren nach Anspruch 10 oder Anspruch 11,
**gekennzeichnet durch**

• ein Aussenden von Messstrahlung (30) auf einen Retroreflektor (21, 22),
• ein Erzeugen einer Retroreflexion einer auf dem Retroreflektor (21, 22) auftreffenden Messstrahlung (30) als einer reflektierten Messstrahlung (31),
• ein Bestimmen eines Auftreffpunktes (13) der von dem Retroreflektor (21, 22) reflektierten Messstrahlung (31) auf dem ersten positionssensitiven Flächendetektor (10), und
• ein Bestimmen eines Servokontrollpunkts.

**13.** Selbstkalibrierungsverfahren nach einem der Ansprüche 10 bis 12,
**gekennzeichnet durch**
ein gleichzeitiges Aussenden der Messstrahlung (30) auf den zweiten positionssensitiven Flächendetektor (20) und auf ein Reflexionsmittel (21, 22, 24), wobei

• ein erster Teil der Messstrahlung (30) auf den zweiten positionssensitiven Flächendetektor (20) auftrifft, und
• ein zweiter Teil der Messstrahlung (30) vom Reflexionsmittel (21, 22, 24) als reflektierte Messstrahlung (31) auf den ersten positionssensitiven Flächendetektor (10) reflektiert wird,

insbesondere wobei das Reflexionsmittel (21, 22, 24)

• einen Retroreflektor (21, 22) und/oder einen Planspiegel (24) aufweist, und/oder
• für die Messstrahlung (30) teildurchlässig ist.

**14.** Selbstkalibrierungsverfahren nach einem der Ansprüche 10 bis 13,
**gekennzeichnet durch**

• eine Zweilagenmessung, in deren Rahmen das Aussenden der Messstrahlung (30) auf den zweiten positionssensitiven Flächendetektor (20) in einer ersten und einer zweiten Ausrichtung der Strahllenkeinheit (110) erfolgt, insbesondere wobei die Strahllenkeinheit (110) in der zweiten Ausrichtung gegenüber der ersten Ausrichtung bezüglich des Horizontalschwenkwinkels um 180° gedreht ist, und
• ein Bestimmen des Auftreffpunkts (14) der Messstrahlung (30) auf dem zweiten positionssensitiven Flächendetektor (20) für beide Ausrichtungen.

**15.** Computerprogrammprodukt mit Programmcode, der auf einem maschinenlesbaren Medium gespeichert ist oder als eine elektromagnetische Welle mit einem Programmcodesegment verkörpert wird, aufweisend computerausführbare Instruktionen zum Ausführen wenigstens der folgenden Schritte des Selbstkalibrierungsverfahrens nach einem der Ansprüche 10 bis 14:

• Aussenden von Messstrahlung (30) auf den zweiten positionssensitiven Flächendetektor (20),
• Bestimmen eines Auftreffpunkts (12) der Messstrahlung (30) auf dem zweiten positionssensitiven Flächendetektor (20), und
• Bestimmen von Kalibrierungsparametern bezüglich einer Position und/oder Richtung der Messstrahlung (30),

insbesondere wenn der Programmcode auf einer Steuer- und Auswerteinheit eines Lasertrackers (1) nach einem der Ansprüche 1 bis 9 ausgeführt wird.

**Claims**

**1.** A laser tracker (1) for determining the position of a target (80) and in particular for continuously tracking the target (80), comprising

• a beam source for generating measurement radiation (30),
• a base (140) defining a vertical axis (9),
• a support (120) defining a tilting axis (8), which is substantially orthogonal to the vertical axis (9), wherein the support (120) is pivotable in a motorized fashion about the vertical axis (9) relative to the base (140) and a horizontal pivoting angle is defined by an orientation of the support (120) relative to the base (140),
• a beam directing unit (110), which is pivotable in a motorized fashion about the tilting axis (8) relative to the support (120), wherein a vertical pivoting angle is defined by an orientation of the beam directing unit (110) relative to the support (120), for emission and orientation of the measurement radiation (130) and for reception of at least part of the measurement radiation (31) reflected at the target (80),
• angle measuring functionality for determining the horizontal pivoting angle and the vertical pivoting angle,
• distance measuring functionality,
• a first position-sensitive surface detector (10), and
• an evaluation and control unit for determining an impingement point (13) of the reflected measurement radiation (31) on the surface detector (10) for generating an output signal for determining the position of the target (80) and in particular for controlling a target tracking functionality,

wherein the laser tracker (1) additionally comprises a calibration device (2) for use with a self-calibration functionality, in the context of which calibration parameters are determinable with regard to a position and/or direction of the measurement radiation (30),

**characterized in that**

• the calibration device (2) has on the base (140) a second position-sensitive surface detector (20), onto which measurement radiation (30) is emittable by the beam directing unit (110), and

• the evaluation and control unit is designed for determining an impingement point (14) of measurement radiation (30) impinging on the second position-sensitive surface detector (20), whereby at least one portion of the calibration parameters is determinable with regard to a position and/or direction of the measurement radiation (30).

2. The laser tracker (1) as claimed in claim 1,

**characterized in that**

a two-position measurement is implementable in the context of the self-calibration functionality by the laser tracker (1), wherein, in the context of the two-position measurement, measurement radiation (30) is emittable onto the second position-sensitive surface detector (20) in a first and a second orientation of the beam directing unit (110), in particular wherein the beam directing unit (110) is rotated by 180° with respect to the horizontal pivoting angle in the second orientation in comparison with the first orientation.

3. The laser tracker (1) as claimed in claim 1 or claim 2,

**characterized in that**

the calibration device (2) has an optical element arranged upstream of the second position-sensitive surface detector (20) in the beam direction of the measurement radiation (30), in particular wherein the optical element

• is provided on the base (140) in a known spatial relation with respect to the second position-sensitive surface detector (20), and

• is fashioned and arranged in such a way that calibration parameters are determinable with regard to a direction of the measurement radiation (30).

4. The laser tracker (1) as claimed in claim 3,

**characterized in that**

the optical element has a pinhole diaphragm (28) having at least one opening which is transmissive to the measurement radiation (30), in particular wherein

• the opening of the pinhole diaphragm (28) is smaller than a diameter of the measurement radiation (30),

• the laser tracker (1) is designed for moving the measurement radiation (30) in a grid over the pinhole diaphragm (28), and/or

• the pinhole diaphragm (28) has an optical grating for generating an interference pattern on the second position-sensitive surface detector (20).

5. The laser tracker (1) as claimed in claim 4,

**characterized in that**

the pinhole diaphragm (28) has a reflection means (21, 22, 24) for reflecting part of the measurement radiation (30) onto the first position-sensitive surface detector (10), in particular wherein the reflection means (21, 22, 24)

• is fitted on a surface of the pinhole diaphragm (28) facing the beam directing unit (110) or forms such a surface, and/or

• adjoins the opening of the pinhole diaphragm (28).

6. The laser tracker (1) as claimed in claim 3,

**characterized in that**

the optical element is designed for reflecting part of the measurement radiation (30) as reflected measurement radiation (31) onto the first position-sensitive surface detector (10)

• as a reflection means (21, 22, 24) that is partly transmissive to the measurement radiation (30), or

• as a beam splitter (23) designed to guide measurement radiation (30) partly onto the second position-sensitive surface detector (20) and partly onto a reflection means (21, 22, 24).

**7.** The laser tracker (1) as claimed in any one of the preceding claims,
**characterized in that**
the calibration device (2) has on the base (140) a reflection means (21, 22, 24), onto which measurement radiation (30) is emittable by the beam directing unit (110) for reflecting the measurement radiation (30) as reflected measurement radiation (31) onto the first position-sensitive surface detector (10), in particular whereby a servo control point is determinable as part of the calibration parameters.

**8.** The laser tracker (1) as claimed in any one of claims 5 to 7,
**characterized in that**
the reflection means (21, 22, 24) at least comprises

• a plane mirror (24),
• a retroreflector (21) designed as a prism or as a corner cube, or
• a retroreflector (22) designed for generating an offset-free, coaxial retroreflection of measurement radiation (30) impinging on it, without generating in the process an offset of the reflected measurement radiation (31) with respect to the direction of the impinging measurement radiation (30), in particular wherein the retroreflector (22) is embodied as a retroreflective film or a microprism array, in particular composed of plastic or glass, and/or has a multiplicity of reflective spheres and/or prisms.

**9.** The laser tracker (1) as claimed in any one of the preceding claims,
**characterized by**

• a first camera (112) for capturing the spatial orientation of the target (80), and
• at least one second camera (114) for coarsely localizing the target (80),

and/or in that

• the measurement radiation (30) is a laser beam, and
• the laser tracker (1) comprises an absolute distance measuring device and/or an interferometer.

**10.** A self-calibration method for a laser tracker (1) as claimed in any one of claims 1 to 9, wherein the laser tracker at least comprises:

• a beam source for generating measurement radiation (30),
• a base (140) defining a vertical axis (9),
• a support (120) defining a tilting axis (8), which is substantially orthogonal to the vertical axis (9), wherein the support (120) is pivotable in a motorized fashion about the vertical axis (9) relative to the base (140) and a horizontal pivoting angle is defined by an orientation of the support (120) relative to the base (140),
• a beam directing unit (110), which is pivotable in a motorized fashion about the tilting axis (8) relative to the support (120), wherein a vertical pivoting angle is defined by an orientation of the beam directing unit (110) relative to the support (120), for emission and orientation of the measurement radiation (130) and for reception of at least part of the measurement radiation (31) reflected at the target (80), comprising a first position-sensitive surface detector (10) for determining an impingement point (13) of the reflected measurement radiation (31) on the first position-sensitive surface detector (10) and for generating an output signal for controlling a target tracking functionality, and
• a calibration device (2) for use with a self-calibration functionality, in the context of which calibration parameters are determinable with regard to a position and/or direction of the measurement radiation (30),

**characterized in that**
the calibration device (2) has a second position-sensitive surface detector (20) on the base (120), and the method at least comprises

• emitting measurement radiation (30) onto the second position-sensitive surface detector (20),
• determining an impingement point (14) of the measurement radiation (30) on the second position-sensitive surface detector (20), and
• determining calibration parameters with regard to a position and/or direction of the measurement radiation (30).

**11.** The self-calibration method as claimed in claim 10,

**characterized by**

• generating a shadow casting, an interference pattern and/or a sharp imaging of the measurement radiation on the second position-sensitive surface detector (20), in particular by means of a pinhole diaphragm (28), an optical grating and/or an optical lens, and/or
• moving the measurement radiation (30) in a grid over a pinhole diaphragm (28) arranged upstream of the second position-sensitive surface detector (20) in the beam direction of the measurement radiation (30), in particular for ascertaining an intensity distribution within the measurement radiation (30) and/or a centroid of the measurement radiation (30) on the second position-sensitive surface detector (20).

12. The self-calibration method as claimed in claim 10 or claim 11,
**characterized by**

• emitting measurement radiation (30) onto a retroreflector (21, 22),
• generating a retroreflection of measurement radiation (30) impinging on the retroreflector (21, 22) as reflected measurement radiation (31),
• determining an impingement point (13) of the measurement radiation (31) reflected by the retroreflector (21, 22) on the first position-sensitive surface detector (10), and
• determining a servo control point.

13. The self-calibration method as claimed in any one of claims 10 to 12,
**characterized by**
simultaneously emitting the measurement radiation (30) onto the second position-sensitive surface detector (20) and onto a reflection means (21, 22, 24), wherein

• a first part of the measurement radiation (30) impinges on the second position-sensitive surface detector (20), and
• a second part of the measurement radiation (30) is reflected by the reflection means (21, 22, 24) as reflected measurement radiation (31) onto the first position-sensitive surface detector (10),

in particular wherein the reflection means (21, 22, 24)

• comprises a retroreflector (21, 22) and/or a plane mirror (24), and/or
• is partly transmissive to the measurement radiation (30).

14. The self-calibration method as claimed in any one of claims 10 to 13,
**characterized by**

• a two-position measurement, in the context of which the measurement radiation (30) is emitted onto the second position-sensitive surface detector (20) in a first and a second orientation of the beam directing unit (110), in particular wherein the beam directing unit (110) is rotated by 180° with respect to the horizontal pivoting angle in the second orientation compared with the first orientation, and
• determining the impingement point (14) of the measurement radiation (13) on the second position-sensitive surface detector (20) for both orientations.

15. A computer program product comprising program code that is stored on a machine-readable medium or is embodied as an electromagnetic wave having a program code segment, comprising computer-executable instructions for performing at least the following steps of the self-calibration method as claimed in any one of claims 10 to 14:

• emitting measurement radiation (30) onto the second position-sensitive surface detector (20),
• determining an impingement point (12) of the measurement radiation (30) on the second position-sensitive surface detector (20), and
• determining calibration parameters with regard to a position and/or direction of the measurement radiation (30),

in particular if the program code is executed on a control and evaluation unit of a laser tracker (1) as claimed in any one of claims 1 to 9.

**Revendications**

1. Appareil de suivi laser (1) pour la détermination de la position d'une cible (80) ainsi qu'en particulier pour la poursuite continue de la cible (80) qui présente :

   • une source de rayonnement pour produire un rayonnement de mesure (30),
   • une base (140) qui définit un axe vertical (9),
   • un support (120) qui définit un axe de basculement (8) qui est substantiellement orthogonal par rapport à l'axe vertical (9), cependant que le support (120) est pivotant de manière motorisée autour de l'axe vertical (9) par rapport à la base (140) et un angle de pivotement horizontal étant défini par une orientation du support (120) par rapport à la base (140),
   • une unité de direction de rayonnement (110) pivotante de manière motorisée autour de l'axe de basculement (8) par rapport au support (120), cependant qu'un angle de pivotement vertical est défini par une orientation de l'unité de direction de rayonnement (110) par rapport au support (120), pour l'émission et l'orientation du rayonnement de mesure (30) et pour la réception d'au moins une partie du rayonnement de mesure réfléchi (31) sur la cible (80),
   • une fonctionnalité de mesure d'angle pour la détermination de l'angle de pivotement horizontal et de l'angle de pivotement vertical,
   • une fonctionnalité de mesure de distance,
   • un premier détecteur de surface sensible à la position (10) et
   • une unité d'exploitation et de commande pour la détermination d'un point d'impact (13) du rayonnement de mesure réfléchi (31) sur le détecteur de surface (10) pour produire un signal de sortie pour la détermination de la position de la cible (80) et en particulier pour commander une fonctionnalité de poursuite de cible,

   cependant que l'appareil de suivi laser (1) présente en outre un dispositif de calibrage (2) pour l'utilisation avec une fonctionnalité de calibrage automatique dans le cadre de laquelle des paramètres de calibrage peuvent être déterminés par rapport à une position et/ou une direction du rayonnement de mesure (30), **caractérisé en ce que**

   • le dispositif de calibrage (2) présente, sur la base (140), un second détecteur de surface sensible à la position (20) sur lequel un rayonnement de mesure (30) peut être émis par l'unité de direction de rayonnement (110) et
   • l'unité d'exploitation et de commande est configurée pour la détermination d'un point d'impact (14) d'un rayonnement de mesure (30) incident sur le second détecteur de surface sensible à la position (20) si bien qu'au moins une partie des paramètres de calibrage peut être déterminée par rapport à une position et/ou une direction du rayonnement de mesure (30).

2. Appareil de suivi laser (1) selon la revendication 1, **caractérisé en ce que**, dans le cadre de la fonctionnalité de calibrage automatique, une mesure en deux couches peut être exécutée, cependant que, dans le cadre de la mesure en deux couches, un rayonnement de mesure (30) peut être émis sur le second détecteur de surface sensible à la position (20) dans une première et une seconde orientation de l'unité de direction de rayonnement (110), en particulier cependant que l'unité de direction de rayonnement (110) est tournée, dans la seconde orientation, de 180° par rapport à l'angle de pivotement horizontal par rapport à la première orientation.

3. Appareil de suivi laser (1) selon la revendication 1 ou la revendication 2, **caractérisé en ce que** le dispositif de calibrage (2) présente un élément optique qui est placé devant le second détecteur de surface sensible à la position (20) dans le sens de rayonnement du rayonnement de mesure (30), en particulier cependant que l'élément optique

   • est mis à disposition sur la base (140) dans un rapport spatial connu par rapport au second détecteur de surface sensible à la position (20) et
   • est configuré et placé de telle manière que des paramètres de calibrage peuvent être déterminés par rapport à une direction du rayonnement de mesure (30).

4. Appareil de suivi laser (1) selon la revendication 3, **caractérisé en ce que** l'élément optique présente un diaphragme à trou (28) avec au moins une ouverture perméable au rayonnement de mesure (30), en particulier cependant que

   • l'ouverture du diaphragme à trou (28) est plus petite qu'un diamètre du rayonnement de mesure (30),
   • l'appareil de suivi laser (1) est configuré pour un déplacement du rayonnement de mesure (30) dans une grille au-dessus du diaphragme à trou (28) et/ou
   • le diaphragme à trou (28) présente une grille optique pour produire un motif d'interférence sur le second détecteur de surface sensible à la position (20).

5. Appareil de suivi laser (1) selon la revendication 4, **caractérisé en ce que** le diaphragme à trou (28) présente un moyen de réflexion (21, 22, 24) pour la réflexion d'une partie du rayonnement de mesure (30) sur le premier détecteur de surface sensible à la position (10), en particulier cependant que le moyen de réflexion (21, 22, 24)

- est fixé sur une surface du diaphragme à trou (28) tournée vers l'unité de direction de rayonnement (110) ou forme une telle surface et/ou
- jouxte l'ouverture du diaphragme à trou (28).

6. Appareil de suivi laser (1) selon la revendication 3, **caractérisé en ce que** l'élément optique pour la réflexion d'une partie du rayonnement de mesure (30) comme rayonnement de mesure réfléchi (31) est configuré

- comme un moyen de réflexion partiellement perméable (21, 22, 24) pour le rayonnement de mesure (30) ou
- comme un séparateur de rayons (23) qui est configuré pour guider le rayonnement de mesure (30) partiellement sur le second détecteur de surface sensible à la position (20) et partiellement sur un moyen de réflexion (21, 22, 24).

7. Appareil de suivi laser (1) selon l'une des revendications précédentes, **caractérisé en ce que** le dispositif de calibrage (2) présente, sur la base (140), un moyen de réflexion (21, 22, 24) sur lequel un rayonnement de mesure (30) peut être émis sur le premier détecteur de surface sensible à la position (10) par l'unité de direction de rayonnement (110) pour la réflexion du rayonnement de mesure (30) comme rayonnement de mesure réfléchi (31), en particulier cependant qu'un point de servo-contrôle peut être déterminé comme partie des paramètres de calibrage.

8. Appareil de suivi laser (1) selon l'une des revendications 5 à 7, **caractérisé en ce que** le moyen de réflexion (21, 22, 24) présente au moins

- un miroir plan (24),
- un rétroréflecteur (21) qui est configuré comme un prisme ou comme un corner cube ou
- un rétroréflecteur (22) qui est configuré pour produire une rétroréflexion coaxiale sans décalage d'un rayonnement de mesure (30) qui le frappe sans produire de décalage du rayonnement de mesure réfléchi (31) vers la direction du rayonnement de mesure incident (30), en particulier cependant que le rétroréflecteur (22) est configuré comme une feuille rétroréfléchissante ou un ensemble de microprismes, en particulier en matière plastique ou en verre et/ou présente une multitude de billes réfléchissantes et/ou de prismes réfléchissants.

9. Appareil de suivi laser (1) selon l'une des revendications précédentes, **caractérisé par** :

- une première caméra (112) pour la détection de l'orientation spatiale de la cible (80) et
- au moins une seconde caméra (114) pour la localisation grossière de la cible (80),

et/ou en ce que

- le rayonnement de mesure (30) est un faisceau laser et
- l'appareil de suivi laser (1) présente un distancemètre absolu et/ou un interféromètre.

10. Procédé de calibrage automatique pour un appareil de suivi laser (1) selon l'une des revendications 1 à 9, cependant que l'appareil de suivi laser présente au moins :

- une source de rayonnement pour produire un rayonnement de mesure (30),
- une base (140) qui définit un axe vertical (9),
- un support (120) qui définit un axe de basculement (8) qui est substantiellement orthogonal par rapport à l'axe vertical (9), cependant que le support (120) est pivotant de manière motorisée autour de l'axe vertical (9) par rapport à la base (140), et un angle de pivotement horizontal par une orientation du support (120) par rapport à la base (140),
- une unité de direction de rayonnement (110) pivotante de manière motorisée autour de l'axe de basculement (8) par rapport au support (120), cependant qu'un angle de pivotement vertical est défini par une orientation de l'unité de direction de rayonnement (110) par rapport au support (120), pour l'émission et l'orientation du rayonnement de mesure (30) et pour la réception d'au moins une partie du rayonnement de mesure réfléchi (31) sur la cible (80), avec un premier détecteur de surface sensible à la position (10) pour déterminer un point d'impact (13) du rayonnement de mesure réfléchi (31) sur le premier détecteur de surface sensible à la position (10) et pour produire un signal de sortie pour commander une fonctionnalité de poursuite de cible et

• un dispositif de calibrage (2) pour l'utilisation avec une fonctionnalité de calibrage automatique dans le cadre de laquelle des paramètres de calibrage peuvent être déterminés par rapport à une position et/ou une direction du rayonnement de mesure (30),

**caractérisé en ce que** le dispositif de calibrage (2) présente, sur la base (120), un second détecteur de surface sensible à la position (20) et le procédé présente au moins

• une émission de rayonnement de mesure (30) sur le second détecteur de surface sensible à la position (20),
• une détermination d'un point d'impact (14) du rayonnement de mesure (30) sur le second détecteur de surface sensible à la position (20) et
• une détermination de paramètres de calibrage par rapport à une position et/ou une direction du rayonnement de mesure (30).

**11.** Procédé de calibrage automatique selon la revendication 10, **caractérisé par**

• une production de projection d'ombre, de motif d'interférence et/ou d'image nette du rayonnement de mesure sur le second détecteur de surface sensible à la position (20), en particulier au moyen d'un diaphragme à trou (28), d'un réseau optique et/ou d'une lentille optique et/ou
• un déplacement du rayonnement de mesure (30) dans une grille par un diaphragme à trou (28) placé dans le sens de rayonnement du rayonnement de mesure (30) devant le second détecteur de surface sensible à la position (20), en particulier pour détecter une distribution d'intensité à l'intérieur du rayonnement de mesure (30) et/ou d'un centre de gravité du rayonnement de mesure (30) sur le second détecteur de surface sensible à la position (20).

**12.** Procédé de calibrage automatique selon la revendication 10 ou la revendication 11, **caractérisé par**

• une émission du rayonnement de mesure (30) sur un rétroréflecteur (21, 22),
• une production d'une rétroréflexion d'un rayonnement de mesure (30) incident sur le rétroréflecteur (21, 22) comme rayonnement de mesure réfléchi (31),
• une détermination d'un point d'impact (13) du rayonnement de mesure réfléchi (31) par le rétroréflecteur (21, 22) sur le premier détecteur de surface sensible à la position (10) et
• une détermination d'un point de servo-contrôle.

**13.** Procédé de calibrage automatique selon l'une des revendications 10 à 12, **caractérisé par** une émission simultanée du rayonnement de mesure (30) sur le second détecteur de surface sensible à la position (20) et sur un moyen de réflexion (21, 22, 24), cependant

• qu'une première partie du rayonnement de mesure (30) frappe le second détecteur de surface sensible à la position (20) et
• qu'une seconde partie du rayonnement de mesure (30) est réfléchie par le moyen de réflexion (21, 22, 24) comme rayonnement de mesure réfléchi (31) sur le premier détecteur de surface sensible à la position (10),

en particulier cependant que le moyen de réflexion (21, 22, 24)

• présente un rétroréflecteur (21, 22) et/ou un miroir plan (24) et/ou
• est partiellement perméable au rayonnement de mesure (30).

**14.** Procédé de calibrage automatique selon l'une des revendications 10 à 13, **caractérisé par**

• une mesure en deux couches dans le cadre de laquelle l'émission du rayonnement de mesure (30) se fait sur le second détecteur de surface sensible à la position (20) dans une première et dans une seconde orientation de l'unité de direction de rayonnement (110), en particulier cependant que l'unité de direction de rayonnement (110) est tournée, dans la seconde orientation, de 180° par rapport à la première orientation par rapport à l'angle de pivotement horizontal et
• une détermination du point d'impact (14) du rayonnement de mesure (30) sur le second détecteur de surface sensible à la position (20) pour les deux orientations.

**15.** Produit de programme d'ordinateur avec code de programme qui est mémorisé sur un support lisible par machine ou incorporé comme onde électromagnétique avec un segment de code de programme qui présente des instructions exécutables sur l'ordinateur pour exécuter au moins les étapes suivantes du procédé de calibrage automatique selon l'une des revendications 10 à 14 :

• émission de rayonnement de mesure (30) sur le second détecteur de surface sensible à la position (20),
• détermination d'un point d'impact (14) du rayonnement de mesure (30) sur le second détecteur de surface sensible à la position (20) et
• détermination de paramètres de calibrage par rapport à une position et/ou une direction du rayonnement de mesure (30),

en particulier lorsque le code de programme est exécuté sur une unité de commande et d'exploitation d'un appareil de suivi laser (1) selon l'une des revendications 1 à 9.

*Fig. 1*

Fig. 2

*Fig. 3a*

Stand der Technik

*Fig. 3b*

Stand der Technik

*Fig. 4*

Fig. 5a

Fig. 5b

*Fig. 6a*

*Fig. 6b*

Fig. 7a

Fig. 7b

Fig. 8a

Fig. 8b

Fig. 9a

Fig. 9b

Fig. 9c

Fig. 9d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4790651 A
- US 4714339 A
- EP 1420264 A
- DE 19941638 C1
- WO 2009100773 A1
- US 20090109426 A
- WO 2005026772 A
- WO 0109642 A1
- EP 0405423 A2
- EP 12198763 A
- WO 2007079600 A1